# EUROPEAN PATENT SPECIFICATION

(11) **EP 1 482 228 B1**
(45) Date of publication and mention of the grant of the patent: **14.05.2008**
(21) Application number: 04253246.5
(22) Date of filing: 01.06.2004
(51) Int. Cl.: F16L 5/04, F16J 3/04

(54) **Fireproof seal**
Brandschutz- Dichtung
Joint ignifuge

(30) Priority: 30.05.2003 GB 0312457
(43) Date of publication of application: 01.12.2004
(73) Proprietor: Trelleborg Sealing Solutions UK Limited, Gloucestershire GL20 8JS (GB)
(72) Inventor: Jones, Allan Turner, Swadlincote Derbyshire DE11 8BH (GB); Smith, Duane John, Burton-on-Trent Staffordshire DE13 0NN (GB)
(74) Representative: Harrison, Ivor Stanley

(56) References cited:
- US-A- 3 576 940
- US-A- 5 058 341
- US-A1- 2003 022 577
- US-B1- 6 239 378

## Description

This invention relates to fireproof seals and particularly provides a fireproof seal which will meet the requirements of FAA AC 20-135 and remain flexible at temperatures as low as -50°C.

There is a need, particularly in airframe construction, for seals which are capable of withstanding high temperature flame exposure but at the same time will retain flexibility, and hence the sealing capability, at reduced temperatures such as those encountered at high altitudes. The aviation standard FAA AC 20-135 sets out the fireproof specification, which is well known in the airframe industry.

One situation in which a fireproof seal is required is where a service pipe, for example for fuel or air, passes through the firewall of an engine bay of an aircraft. The pipe is required to pass through a hole formed in the firewall with clearance to accommodate vibration or other movement and is generally sealed by an annular bellows-type seal having a flange which is bolted to the firewall, the cylindrical part of the seal being secured around the pipe with a suitable strap. However, in order to change such seals, it is necessary to carry out substantial dismantling of the equipment in and around the engine bay, in order for the old seal to be removed from, and more particularly for the new seal to be placed around, the pipe.

US-A-5058341 and US-A-3576940 describe respectively a fire-stop collar assembly for a pipe and a flame-retardant electrically-insulated conductor cable.

It is an object of the present invention to provide a seal which can be replaced more easily than conventional seals, thus reducing man-hour costs and turn-around times in servicing intervals.

According to one aspect of the present invention, a seal comprises at least two concentric seal elements, each element having confronting ends and the elements being adapted to be placed in use in sealing relationship with one element at least partially encircling the other, the respective confronting ends of each element being circumferentially spaced apart, preferably by 180°, in which the seal elements include one or more convolutes adapted for mating engagement with each other, in order to accommodate relative movement as between the pipe and the wall or other member. The convolutes in the respective elements are adapted for mating engagement with each other.

Preferably, at least one seal element includes a radially outer-directed end flange for attachment to a wall or other member through which a pipe, carrying a seal according to the invention, passes.

In use, the ends of a first seal element are separated or prised apart and placed around the pipe in the position at which it is to be sealed, and a further, larger-diameter, seal element is likewise separated at its ends and placed at least partially to encircle the first element, with the respective ends out of registration and, preferably, diametrally disposed. The seal may then be attached respectively to the wall and around the pipe with suitable strap or banding elements.

The respective seal elements are preferably formed from alternating layers of glass fibre fabric and a high temperature-resistant silicone rubber composition, the inner-facing layer comprising the rubber composition. The glass fibre fabric may comprise any glass material or composition and the fabric may be knitted, woven or of any other fabric construction. A knitted fabric having a weight between 200 and 300 g/m², preferably 240 - 280 g/m² and from 60 - 70 wales per 10 cm and from 60 - 70 courses per 10 cm may be suitable. The glass may be E-glass and may be silica-modified for additional temperature resistance.

The silicone rubber composition is preferably based on a synthetic rubber comprising a dymethylsiloxane polymer, preferably comprising a high ash cohesion silicone containing a filler material comprising chopped glass fibre. The chopped glass fibre may be present in a concentration between 20 - 75% by weight, preferably from 30 - 70 % by weight. For the respective seal elements, the inner-facing surfaces comprise the silicone rubber calendered onto the glass fibre fabric, the second and subsequent layers or plies being also calendered.
The layers or plies are placed together in the desired orientation in moulds of various dimensions and shape and are then cured to produce a flexible, dimensionally stable product.

Preferably, a two-ply glass fibre/silicone composite is used although a greater number of plies may be used according to the particular application circumstances.

In a further aspect, the invention provides a method for sealing a pipe in a hole formed in a wall, the method comprising applying a first seal element (as hereinbefore described) around the pipe adjacent to the wall, applying a second or subsequent such seal element at least partially to encircle the first, the respective confronting ends being out of registration, and securing the resulting seal respectively to the wall and around the pipe.

In yet a further aspect, the invention provides a pipe sealed in a hole formed in a wall with a seal as hereinbefore described.

The confronting ends of the seal elements may be adjacent or contiguous in use or may be spaced apart.

Embodiments of the invention will now be described by way of example with reference to the accompanying drawings, of which:
Figure 1 is a perspective view of a seal according to the invention;
Figure 2 is a longitudinal section of the seal shown in Figure 1;
Figure 3 is a cross-section along the line III-III of Figure 2;
Figure 4 is a fragmentary view on an enlarged scale showing a section of the seal as shown in Figure 2;
Figure 5 shows a first stage of assembly of a seal according to the invention; and
Figure 6 shows the second stage of the assembly process.

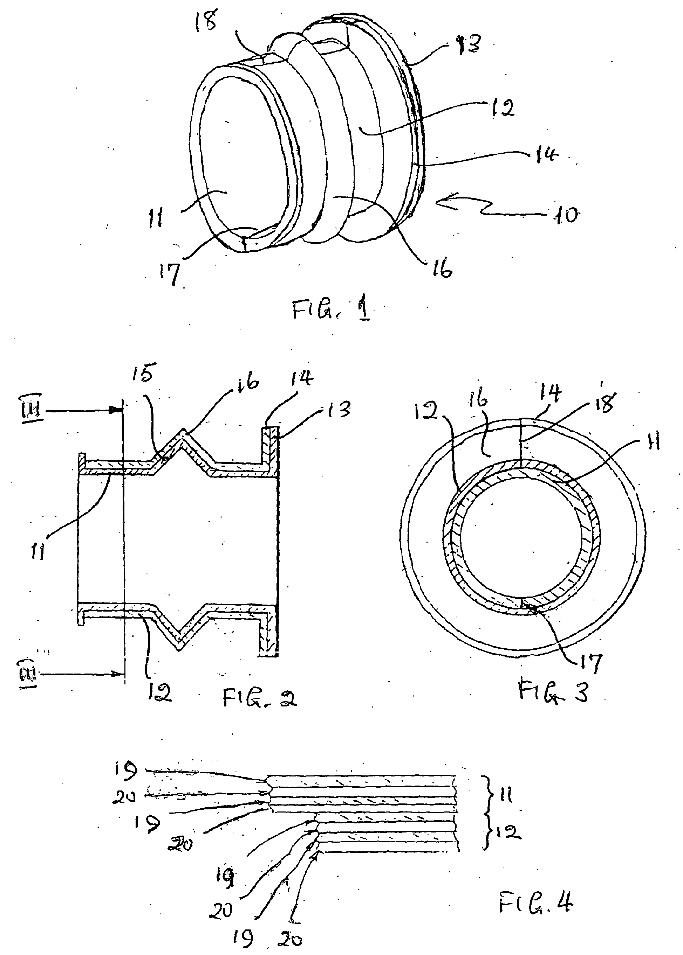

With reference firstly to Figure 1, the seal is shown generally at 10 and consists of an inner seal element 11 and an outer seal element 12. The outer element 12 encircles the inner element 11; the elements have respective flanges 13,14 at one end and are formed with mating convolutes 15, 16 (see also Figure 2). The seal elements are split longitudinally or otherwise formed to provide adjoining ends; the ends defining the split 17 formed in inner seal element 11 are, in use, diameterally opposed to the ends defining the split 18 formed in outer element 12, as shown in Figure 3. The outer diameter of seal element 11 is the same as the inner diameter of seal element 12.

With reference to Figure 4, inner element 11 is formed from alternating layers or plies of a silicone rubber composition containing from 30 to 70% by weight of a chopped glass fibre, 19, and a commercially available E-glass knitted fabric, 20. Outer seal element 12 is also formed from alternating layer or plies of the same materials.

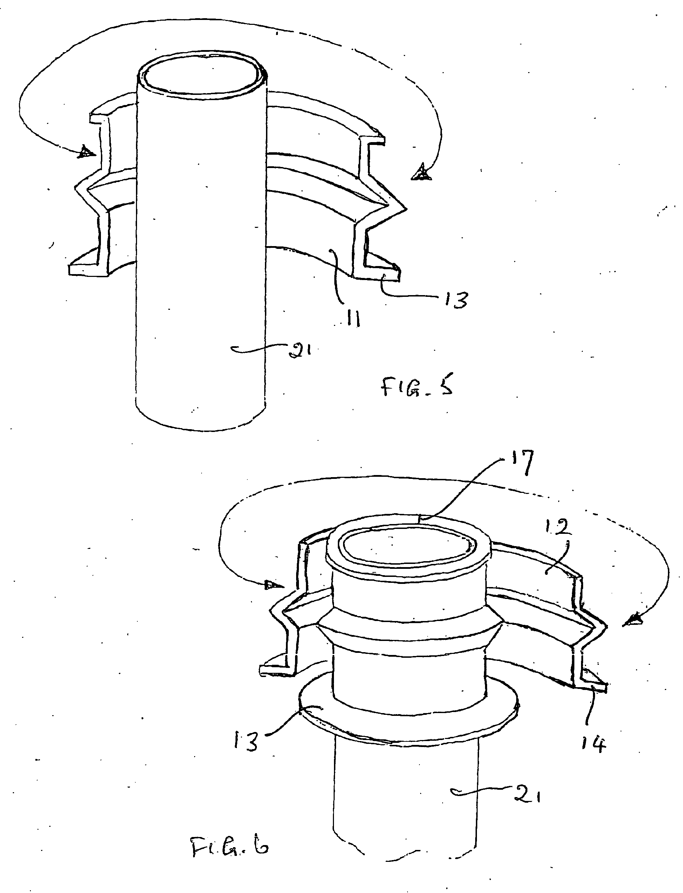

With reference to Figure 5, a pipe 21 to be sealed against a firewall or bulkhead (not shown) is firstly encircled with seal element 11, the ends being prised apart and the element being applied around the pipe and, thereafter, allowed to lie adjacent the pipes with the ends of the element in contiguous relationship. With reference to Figure 6, the second seal element 12 is then applied around the first element 11 so that the respective contiguous ends are diametrally opposite the contiguous ends 17 of the element 11. The flanges 13, 14 are then joined to the bulkhead or firewall with bolts and load-spreading semi-annular washers (not shown) and the remote or distal cylindrical ends of the seal are attached to the pipe 21 with a suitable annular retainer such as a worm-drive hose clip.

A seal as thus constructed and applied can be replaced without substantial dismantling of other items in the vicinity of the pipe 21 and the bulkhead or firewall and, in use, provides a performance equivalent to or better than a conventional annular seal of a similar wall thickness.

## Claims

1. A seal (10) comprising at least two concentric seal elements (11, 12), each element having confronting ends and the elements being adapted to be placed in use in sealing relationship with one element at least partially encircling the other, the respective confronting ends of each element being circumferentially spaced apart (17, 18), **characterised in that** the seal elements include one or more convolutes (15, 16) adapted for mating engagement with each other.

2. A seal according to claim 1, in which at least one seal element includes a radially outwardly-directed end flange for attachment in use to a wall or other member through which a pipe passes.

3. A seal according to claim 1 or claim 2, in which the respective seal elements are formed from alternating layers of glass fibre fabric and a high temperature-resistant silicone rubber composition, the inner-facing layer comprising the rubber composition.

4. A seal according to claim 3, in which the glass of the glass fibre comprises E-glass, optionally silica-modified.

5. A seal according to claim 3 or claim 4, in which the silicone rubber composition is based on a synthetic rubber comprising a dimethylsiloxane polymer comprising a high ash cohesion silicone containing a filler material comprising chopped glass fibre.

6. A seal according to claim 5, in which the seal elements comprise a two-ply glass fibre/silicone composite.

7. A seal according to any preceding claim, including strap or banding elements.

8. A method for sealing a pipe (21) in a hole formed in a wall using a seal (10) according to any preceding claim, the method comprising applying a first seal element (11) around the pipe adjacent to the wall, applying a second or subsequent such seal element (12) at least partially to encircle the first, the respective confronting ends being circumferentially spaced apart, and securing the resulting seal respectively to the wall and around the pipe.

9. A pipe sealed in a hole formed in a wall with a seal according to any of claims 1 to 7.

## Patentansprüche

1. Dichtung (10) mit wenigstens zwei konzentrischen Dichtungselementen (11, 12), wobei jedes Element einander gegenüberstehende Enden aufweist und die Elemente so ausgebildet sind, dass sie bei Gebrauch in dichtender Beziehung, bei welcher ein Element wenigstens teilweise das andere umfasst, platziert sind, wobei die jeweiligen, sich gegenüberstehenden Enden jedes Elements umfänglich beabstandet sind (17, 18), **dadurch gekennzeichnet, dass** die Dichtungselemente eine oder mehrere Faltungen (15, 16) enthalten, die zum passenden Eingriff miteinander ausgebildet sind.

2. Dichtung nach Anspruch 1, bei welcher wenigstens ein Dichtungselement einen radial nach außen gerichteten Endflansch zur Befestigung bei Gebrauch an einer Wand oder einem anderen Element, durch welches ein Rohr läuft, enthält.

3. Dichtung nach Anspruch 1 oder Anspruch 2, bei welcher die jeweiligen Dichtungselemente aus abwechselnden Schichten eines Glasfasergewebes und einer hochtemperaturfesten Silikon-Gummi-Zusammensetzung gebildet sind, wobei die nach innen zeigende Schicht die Gummizusammensetzung aufweist.

4. Dichtung nach Anspruch 3, bei welcher das Glas der Glasfaser E-Glas, optional mit Silika modifiziert, aufweist.

5. Dichtung nach Anspruch 3 oder Anspruch 4, bei welcher die Silikon-Gummi-Zusammensetzung auf einem Kunstgummi basiert, der ein Dimethylsiloxan-Polymer mit einem aschereichen Kohäsionssilikon aufweist, das ein Füllmaterial mit geschnittener Glasfaser enthält.

6. Dichtung nach Anspruch 5, bei welcher die Dichtungselemente einen zweilagigen Glasfaser-Silikon-Verbundstoff aufweisen.

7. Dichtung nach einem vorherigen Anspruch, die Riemen- oder Bandelemente enthält.

8. Verfahren zum Abdichten eines Rohrs (21) in einem in einer Wand gebildeten Loch unter Verwendung einer Dichtung (10) nach einem vorherigen Anspruch, wobei das Verfahren das Anlegen eines ersten Dichtungselements (11) um das Rohr angrenzend an die Wand, das Anlegen eines zweiten oder folgenden solchen Dichtungselements (12) derart, dass es wenigstens teilweise das erste umfasst, wobei die jeweiligen sich gegenüberstehenden Enden umfänglich beabstandet sind, und das Befestigen der resultierenden Dichtung jeweils an der Wand und um das Rohr aufweist.

9. Rohr, das in einem in einer Wand gebildeten Loch mit einer Dichtung nach einem der Ansprüche 1 bis 7 abgedichtet ist.

## Revendications

1. Un joint (10) comprenant au moins deux éléments (11, 12) de joint concentriques, chaque élément ayant des extrémités de confrontation et les éléments étant adaptés pour être placés en utilisation en relation d'étanchéité avec un élément encerclant au moins partiellement l'autre, les extrémités respectives se confrontant de chaque élément étant circonférentiellement espacées l'une de l'autre (17, 18), **caractérisé en ce que** les éléments de joint incluent une ou plusieurs convolutions (15, 16) adaptées en engagement d'appariement l'un avec l'autre.

2. Joint selon la revendication 1, dans lequel au moins un élément de joint inclut un flasque d'extrémité dirigé radialement vers l'extérieur pour être attaché en utilisation à une paroi ou autre membrure au travers de laquelle un tuyau passe.

3. Joint selon la revendication 1 ou la revendication 2, dans lequel les éléments de joint respectifs sont formés à partir de couches alternées de tissu de fibre de verre et d'une composition de caoutchouc silicone résistante à haute température, la couche orientée vers l'intérieur comprenant la composition de caoutchouc.

4. Joint selon la revendication 3, dans lequel le verre de la fibre de verre comprend un verre E, optionnellement modifié avec de la silice.

5. Joint selon la revendication 3 ou la revendication 4, dans lequel la composition de caoutchouc silicone est basée sur un caoutchouc de synthèse comprenant un polymère diméthylsiloxane comprenant un silicone de cohésion à forte teneur en cendres contenant un matériau de remplissage composé de fibres de verre hachées.

6. Joint selon la revendication 5, dans lequel les éléments de joint comprennent un composite fibre/silicone de verre à deux plis.

7. Joint selon l'une des revendications précédentes, incluant des éléments de lanières ou de bandes.

8. Procédé pour étanchéifier un tuyau (21) dans un trou formé dans une paroi utilisant un joint (10) selon l'une des revendications ci-dessus, le procédé comprenant l'application d'un premier élément de joint (11) autour du tuyau adjacent à la paroi, l'application d'un second élément ou élément de joint suivant identique (12) au moins partiellement pour encercler le premier, les extrémités de confrontation respectives étant circonférentiellement espacées l'une de l'autre, et la fixation du joint résultant respectivement à la paroi et autour du tuyau.

9. Un tuyau étanchéifié dans un trou formé dans une paroi avec un joint selon l'une des revendications 1 à 7.
